# FASCICULE DE BREVET EUROPEEN

(11) **EP 3 237 167 B1**
(45) Date de publication et mention de la délivrance du brevet: **01.05.2019**
(21) Numéro de dépôt: 15808613.2
(22) Date de dépôt: 14.12.2015
(51) Int. Cl.: B29B 15/12, B29B 15/14, B29C 70/52, B29C 47/00, B29C 47/90

(54) **DISPOSITIF ET PROCÉDÉ D'ENROBAGE D'UN FIL**
VORRICHTUNG UND VERFAHREN ZUR BESCHICHTUNG EINES DRAHTES
DEVICE AND METHOD FOR COATING A WIRE

(30) Priorité: 22.12.2014 FR 1463088
(43) Date de publication de la demande: 01.11.2017
(73) Titulaire: Compagnie Générale des Etablissements Michelin, 63000 Clermont-Ferrand (FR)
(72) Inventeur: SEBE, Marc, 63040 Clermont-Ferrand Cedex 09 (FR); DELFINO, Antonio, 63040 Clermont-Ferrand Cedex 09 (FR); LIMAT, Gabriel, 63040 Clermont-Ferrand Cedex 09 (FR)
(74) Mandataire: Noel, Luminita
(86) Numéro de dépôt international: PCT/EP2015/079542
(87) Numéro de publication internationale: WO 2016/102222

(56) Documents cités:
- EP-A1- 0 520 347
- EP-A2- 0 206 134
- WO-A1-2009/045191
- US-A- 3 231 414
- US-A- 4 474 830
- US-A- 5 002 712

## Description

La présente invention concerne le domaine de la fabrication de filaments comprenant un fil et un enrobage entourant ce fil.

Il est connu d'intégrer à la matière constituant les pneumatiques des éléments de renforcement filaires. Pour remplacer les éléments de renforcement filaires couramment en acier, il a été proposé des filaments comprenant un fil en fibres de verre imprégnées d'une résine thermodurcie, généralement dénommé par l'abréviation CVR, entourée d'une couche de colle, notamment de colle résorcinol formaldéhyde latex, généralement dénommée par l'abréviation RFL. Un pneumatique intégrant des filaments non métalliques est décrit dans le brevet EP -A-1 167 089.

Cependant, la fabrication de filaments non métalliques pose des difficultés. Il existe en effet une difficulté liée au fait que le fil CVR présente une surface lisse et est non poreux, si bien qu'il n'a pas la capacité d'absorber la couche de colle RFL. Il existe également une difficulté d'obtention d'une homogénéité de l'épaisseur de la couche de colle RFL aussi bien circonférentiellement que dans le sens de la longueur du fil. Il existe également une difficulté liée au caractère polluant des produits utilisés lors de leur mise en oeuvre.

Le brevet US 3 231 414 décrit un dispositif d'enrobage d'un fil par une matière d'enrobage qui comprend une plateforme sur laquelle est déversée la matière d'enrobage pour former un amas de matière et, sur un côté de cette plateforme, une pluralité de filières. Des fils à enrober traversent cet amas de matière et traversent les filières. La matière d'enrobage étant à l'air libre sur le plateau, elle peut subir des transformations physiques et chimiques dégradant la qualité de l'enrobage réalisé sur les fils dans les filières.

Le brevet US 5 002 712 décrit un dispositif d'enrobage qui comprend un boitier dans lequel sont aménagées des chambres sous pression qui sont traversées longitudinalement par le fil à enrober et qui contiennent la matière d'enrobage, en grande quantité. Le boîtier est pourvu d'une filière annulaire locale qui est située en aval des chambres d'enrobage et traversée par le fil et dont l'extrémité aval est directement ouverte à l'extérieur.

Le brevet EP 0 206 134 décrit un dispositif d'enrobage qui comprend un boîtier pourvu d'une douille qui est traversée longitudinalement par le fil à enrober et qui contient la matière d'enrobage, également grande quantité. Ce dispositif d'enrobage comprend en outre une filière 15 qui est située en aval et à distance du boîtier et qui traversée par le fil préalablement enrobé, si bien que la matière d'enrobage portée par le fil passe dans l'air ambient entre la douille et la filière.

La présente invention a pour but, pour répondre aux besoins, d'apporter notamment des solutions aux difficultés mentionnées ci-dessus.

Selon un mode d'exécution, il est proposé un dispositif d'enrobage d'un fil par une matière d'enrobage, selon la revendication 1.

Ce dispositif d'enrobage comprend un boîtier qui comprend un support et un couvercle monté sur le support, délimitant une chambre, et un corps de filière installé dans ladite chambre, entre le support et le couvercle ; le support et le couvercle aménageant entre eux un passage traversant d'entrée et un passage traversant de sortie situés de part et d'autre de ladite chambre, le corps de filière comprenant une partie inférieure et une partie supérieure en appui l'une sur l'autre, aménageant entre elles un canal calibré de filière, lesdits passages traversants d'entrée et de sortie et ledit canal calibré de filière étant alignés, de façon à pouvoir être traversés longitudinalement par le fil à l'état tendu ; le corps de filière délimitant un espace de dépôt, situé entre le passage traversant d'entrée et le canal de filière et pouvant être traversé par le fil.

Le dispositif d'enrobage comprend en outre un conduit d'amenée du produit d'enrobage, qui présente une extrémité inférieure de sortie débouchant dans ledit espace de dépôt et située à proximité et au-dessus du fil et qui est solidaire de la partie supérieure de la filière et s'étend au travers d'un passage traversant du couvercle.

Le corps de filière comprend des parois de confinement situées de part et d'autre du conduit d'amenée et présentant des orifices traversants traversés par le fil, ces parois de confinement délimitant ledit espace de dépôt de sorte que ce dernier soit ouvert vers le bas.

De plus, le support présente un orifice inférieur de sortie de ladite chambre pour l'évacuation du surplus de matière d'enrobage provenant dudit espace de dépôt et dudit canal calibré de filière.

Le corps de filière peut être maintenu dans ladite chambre, entre le support et le couvercle, par conjugaison de formes.

La chambre présente des flancs d'ajustement en regard entre lesquels le corps de filière est engagé de façon ajustée, un ressort étant installé entre le corps de filière et le couvercle pour maintenir le corps de filière en appui sur au moins un épaulement du support.

Le corps de filière peut comprendre au moins une paroi transversale, le canal de filière comprenant un orifice calibré de filière aménagé au travers de cette paroi transversale.

Ladite paroi transversale peut être inclinée par rapport à la direction du fil.

Le corps de filière peut comprendre plusieurs parois transversales espacées présentant un orifice calibré de filière.

Il est également proposé un procédé d'enrobage d'un fil par une matière d'enrobage, selon la revendication 7, mettant en oeuvre le dispositif d'enrobage.

Ce procédé comprend : faire circuler longitudinalement, de l'amont vers l'aval, le fil dans un état tendu au travers dudit passage traversant d'entrée du boîtier, dudit espace de dépôt puis d'un canal longitudinal calibré de filière dudit corps de filière installé dans ladite chambre délimitée par un boîtier ; déposer de la matière d'enrobage sur le fil lors de son passage au travers dudit espace de dépôt et calibrer l'épaisseur de l'enrobage du fil lors de son passage dans le canal calibré de filière ; et évacuer le surplus de matière d'enrobage provenant dudit espace de dépôt et dudit canal calibré de filière par ledit orifice inférieur de sortie de ladite chambre.

Le procédé peut comprendre : faire circuler le fil enrobé dans au moins un four.

Le procédé peut comprendre : faire circuler le fil au travers d'un premier corps de filière pour enrober le fil d'une première couche d'une première matière d'enrobage puis au travers d'au moins un four, et, ensuite, faire circuler le fil au travers d'un second corps de filière pour enrober le fil d'une seconde couche d'une seconde matière d'enrobage puis au travers dudit four.

Le procédé peut comprendre : évacuer le surplus de matière d'enrobage vers un réservoir intermédiaire, alimenter l'espace de dépôt depuis ce réservoir intermédiaire, alimenter ce réservoir intermédiaire depuis un réservoir de stockage.

Il est également proposé une installation d'enrobage comprenant au moins un dispositif d'enrobage et comprenant au moins un four situé en aval de ce dispositif d'enrobage.

Des dispositifs d'enrobage et une installation d'enrobage vont maintenant être décrits à titre d'exemples non limitatifs, illustrés par le dessin sur lequel :
- la figure 1 représente une coupe longitudinale verticale d'un dispositif d'enrobage, selon I-I de la figure 2 ;
- la figure 2 représente une coupe transversale verticale du dispositif d'enrobage de la figure 1, selon II-II de cette figure 1 ;
- la figure 3 représente une coupe longitudinale verticale d'une variante de réalisation du dispositif d'enrobage de la figure 1 ;
- la figure 4 représente une coupe transversale verticale d'un ensemble d'enrobage incluant deux dispositifs d'enrobage ;
- la figure 5 représente une vue éclatée en perspective du de l'ensemble d'enrobage de la figure 4 ; et
- la figure 6 représente schématiquement une installation d'enrobage incluant l'ensemble d'enrobage ci-dessus.

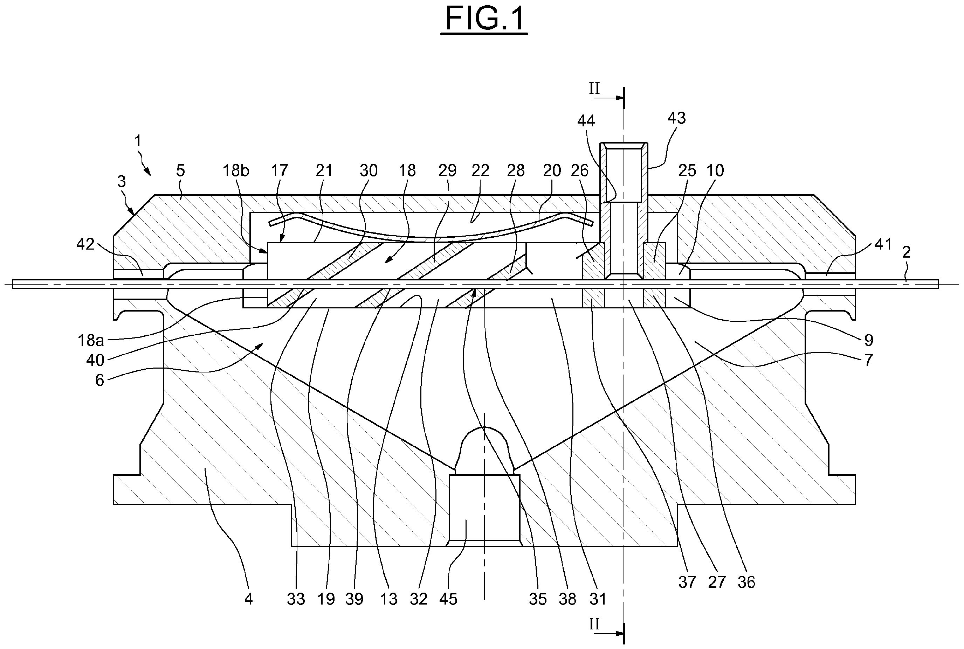

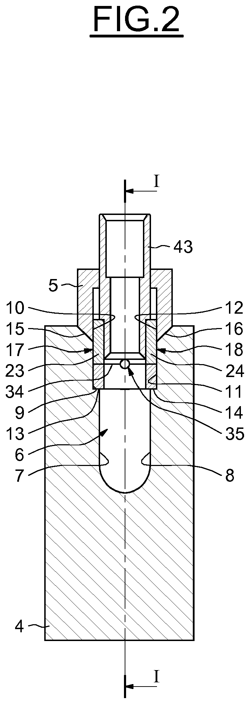

Comme illustré sur les figures 1 et 2, un dispositif d'enrobage 1, pour l'enrobage d'un fil 2, comprend un boîtier 3 qui comprend un support inférieur 4 et un couvercle supérieur 5 fixé de façon démontable et ajusté sur le support 4. Le support 4 et le couvercle 5 délimitent une chambre d'enrobage 6 formée longitudinalement et verticalement, qui comprend une grande partie inférieure aménagée dans le support 4 et une petite partie supérieure aménagée dans le couvercle 5.

La chambre 6 est délimitée latéralement par des flancs longitudinaux en regard 7 et 8 formés dans le support 4 et dans le couvercle 5, dans lesquels sont aménagés des évidements en regard dont les fonds forment d'une part des flancs longitudinaux d'ajustement 9 et 10 aménagés dans le support 4 et dans le couvercle 5, se prolongeant verticalement l'un l'autre, et d'autre part, en face, des flancs longitudinaux d'ajustement 11 et 12 aménagés dans le support 4 et dans le couvercle 5, se prolongeant verticalement l'un l'autre.

Les flancs longitudinaux d'ajustement 9 et 11 du support 4 rejoignent les flancs longitudinaux 7 et 8 par des épaulements longitudinaux d'appui 13 et 14 orientés vers le haut.

Le couvercle 5 est ajusté sur le support 4 par des surfaces longitudinales de joint 15 et 16 situées de part et d'autre de la chambre 6 et formant un V ouvert vers le haut.

Le couvercle 5 peut être monté sur le support 4 grâce à des moyens d'attache rapide et le support 4 peut être installé sur une table adaptée et fixé à ce dernier par des moyens d'attache rapide, par exemple par des systèmes à genouillère.

Le dispositif d'enrobage 1 comprend une filière 17 qui comprend un corps de filière 18 se présentant sous la forme d'un parallélépipède allongé, qui est installé longitudinalement à l'intérieur de la chambre 6 et qui s'étend au travers de la chambre 6. Le corps de filière 18 est engagé de façon ajustée entre les flancs d'ajustement 9 et 11 du support 4 et entre les flancs d'ajustement 10 et 12 du couvercle 5. Les bords longitudinaux de la face inférieure 19 du corps de filière 18 sont en appui sur les épaulements longitudinaux d'appui 13 et 14 du support 4.

Le corps de filière 18 est maintenu en appui sur les épaulements longitudinaux d'appui 13 et 14 grâce à un ressort 20 en forme de lame interposé entre la face supérieure 21 du corps de filière 18 et la face supérieure 22 de la chambre 6 dans le couvercle 5. A cet effet, une portion médiane du ressort 20 est en appui sur la face supérieure 21 du corps de filière 18 et des portions d'extrémité du ressort 20 sont en appui sur la face supérieure 22 de la chambre 6.

Ainsi, le corps de filière 18 est maintenu entre le support 4 et le couvercle 5 par conjugaison de formes. D'autres formes que celles décrites ci-dessus pourraient être prévues.

Le corps de filière 18 comprend deux parois longitudinales 23 et 24 espacées transversalement, en contact avec les flancs longitudinaux d'ajustement 9, 10 et 11, 12.

A sa portion d'extrémité dite amont, le corps de filière 18 comprend deux parois transversales de confinement 25 et 26 qui relient les deux parois longitudinales 23 et 24, qui sont espacées longitudinalement et qui délimitent entre elles un espace de dépôt 27 ouvert vers le bas.

Entre sa portion d'extrémité amont et sa portion d'extrémité dite aval, le corps de filière 18 comprend en outre trois parois transversales 28, 29 et 30 qui relient les deux parois longitudinales 23 et 24 et qui sont espacées longitudinalement. Les parois transversales 26, 28, 29 et 30 délimitent entre elles des espaces 31, 32 et 33 ouverts de haut en bas. Les parois 26, 28, 29 sont inclinées par rapport à la direction du fil 2, de haut en bas et de l'amont vers l'aval.

Le corps de filière 18 est divisé en une partie inférieure 18a et une partie supérieure 18b en appui l'une sur l'autre par un plan de joint 34 s'étendant longitudinalement et transversalement. Par exemple, la partie inférieure 18a est engagée complètement dans le support 4 et la partie supérieure 18b est engagée partiellement dans le support 4.

Les parties inférieure et supérieure 18a et 18b du corps de filière 18 délimitent entre elles un canal longitudinal de filière 35 qui comprend des orifices circulaires calibrés de filière 36, 37, 38, 39 et 40 traversant respectivement les parois transversales 25, 26, 28, 29 et 30, ces orifices étant réalisés pour une moitié dans la partie inférieure 18a et pour l'autre moitié dans la partie supérieure 18b.

Le support 4 et le couvercle 5 délimitent entre eux, en amont et à distance de l'extrémité amont du corps de filière 18, un passage traversant circulaire d'entrée 41 et, en aval et à distance de l'extrémité aval du corps de filière 18, un passage traversant circulaire de sortie 42. Les passages traversant 41 et 42 sont réalisés pour une moitié dans le support 4 et pour l'autre moitié dans le couvercle 5.

Les passages traversant d'entrée de sortie 41 et 42 et les orifices calibrés de filière 36, 37, 38, 39 et 40 formant le canal de filière 35 sont alignés longitudinalement de façon à pouvoir être traversés longitudinalement par le fil à enrober 2 à l'état tendu, les moyens de montage du couvercle 5 sur le support 4 et du corps de filière 18 étant adaptés pour assurer cet alignement de façon précise. Les passages traversant d'entrée de sortie 41 et 42 présentent des sections beaucoup plus grandes que les orifices calibrés de filière 36, 37, 38, 39 et 40, de façon à laisser passer librement le fil 2.

La partie supérieure 18b du corps de filière 18 est équipée d'un conduit d'amenée 43 dont l'extrémité inférieure est fixée dans la partie supérieure de l'espace de dépôt 27 de façon à déboucher au-dessus et à proximité du fil 2 qui traverse cet espace. Le conduit 43 traverse un passage 44 du couvercle 5 de façon à présenter une extrémité supérieure située à l'extérieur, sur laquelle peut être branché un tuyau d'alimentation pour l'amenée d'un produit d'enrobage.

Le support 4 présente, à sa partie inférieure, un orifice traversant inférieur de sortie 45, le fond de la chambre 6 étant, dans le support 4, convergent vers cet orifice de sortie 45.

Le dispositif d'enrobage 1 qui vient d'être décrit peut être utilisé et peut fonctionner de la manière suivante.

Le fil à enrober 2 défile longitudinalement de l'amont vers l'aval. Les passages d'entrée et de sortie 41 et 42 présente des sections nettement plus grandes que la section du fil 2 de façon à laisser passer ce dernier très librement.

Le produit d'enrobage, généralement à l'état pâteux, est amené par le conduit d'amenée 43 dans l'espace du dépôt 27 et s'écoule vers le bas. Le fil 2 traverse, dans cet espace de dépôt 27, le produit d'enrobage et en emporte avec lui. Par le fait que le fil 2 traverse successivement l'orifice 37 de la paroi 26 et les orifices calibrés de filière 38, 39 et 40 des parois 28, 29 et 30, l'épaisseur restante du produit d'enrobage autour du fil 2, après que ce dernier ait quitté la filière 17, est calibrée.

Dans la chambre 6, le surplus de produit d'enrobage amené dans l'espace du dépôt 27 s'écoule par gravité vers le bas et le surplus de produit d'enrobage raclé par les faces amont des parois 38, 39 et 40 autour du fil 2 s'écoule par gravité vers le bas, depuis les espaces intermédiaires 37, 38 et 39, pour être évacué vers l'extérieur par l'orifice inférieur 45 de sortie de la chambre 6.

Le dispositif d'enrobage 1 est particulièrement facile à démonter. Il suffit de démonter le couvercle 5, d'enlever le ressort 20, d'extraire la partie supérieure 18a de la filière 17, éventuellement d'écarter le fil 2 s'il est encore présent et d'extraire la partie inférieure 18b de la filière 17. Ceci étant fait, on peut aisément procéder à leur nettoyage.

Pour le remontage, on peut procéder de manière inverse. Avantageusement, le fil 2 peut être mis en place comme décrit précédemment après la mise en place de la partie inférieure 18a du corps de filière 18 dans le support 4 et avant la mise en place de la partie supérieure 18b du corps de filière 18, du ressort 20 et du couvercle 5.

En outre, le produit d'enrobage reste confiné à l'intérieur de la chambre 6, de telle sorte qu'il n'est pas exposé à la lumière et aux éventuelles pollutions extérieures et ne produit pas de nuisances extérieures.

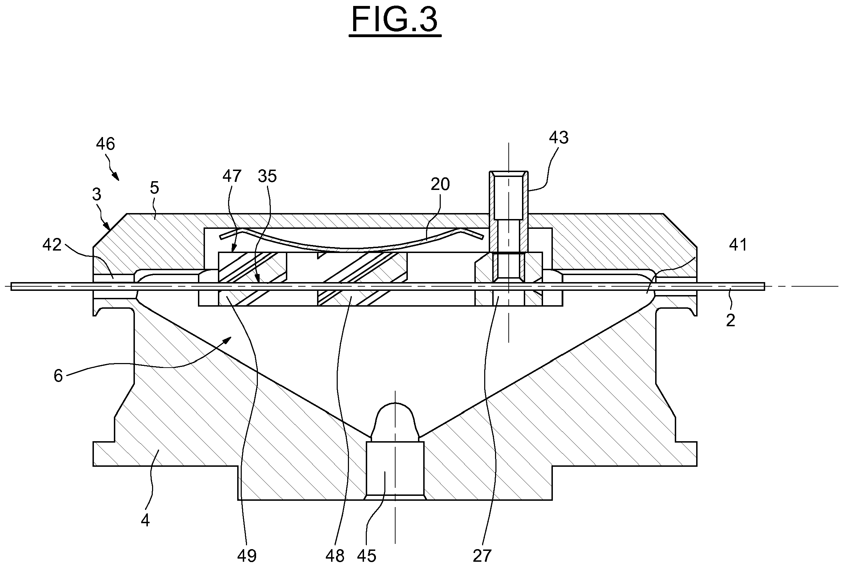

Comme illustré sur la figure 3, un dispositif d'enrobage 46 se différencie du dispositif d'enrobage 1 uniquement par le fait qu'il est équipé d'une filière 47 qui remplace la filière 17 et qui comprend, à titre de variante de réalisation, un corps de filière qui comprend uniquement deux parois transversales 48 et 49, présentant des orifices calibrés de filière, au lieu des trois parois 28, 29, et 30. Selon une autre variante de réalisation, une seule paroi transversale ou plus de trois parois transversales présentant des orifices calibrés de filière pourraient être prévues.

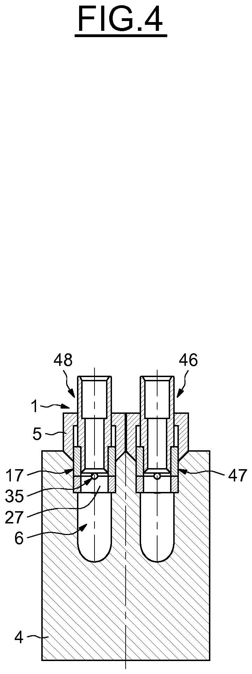

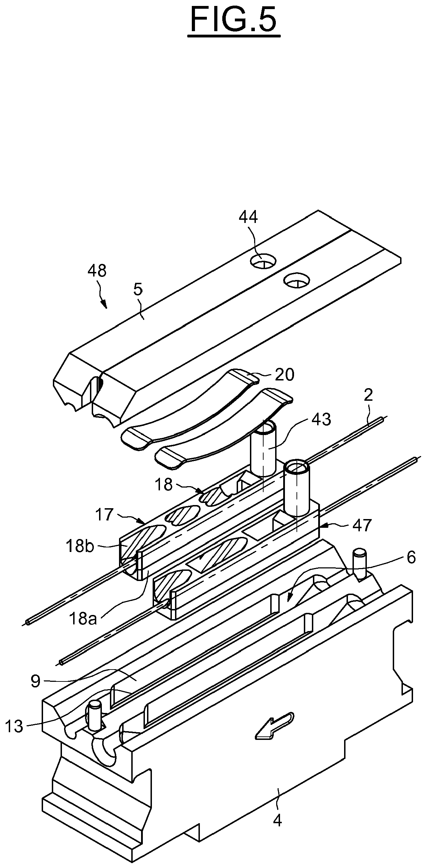

Comme illustré sur les figures 4 et 5, un ensemble d'enrobage 48 comprend, à titre de variante de réalisation, le dispositif d'enrobage 1 et le dispositif d'enrobage 46, formés de façon indépendante mais présentant un support commun 4. Dans cet ensemble d'enrobage 48, les dispositifs d'enrobage 1 et 46 sont disposés parallèlement l'un à côté de l'autre et selon la même disposition, leurs parties amont et leurs parties aval étant respectivement adjacentes.

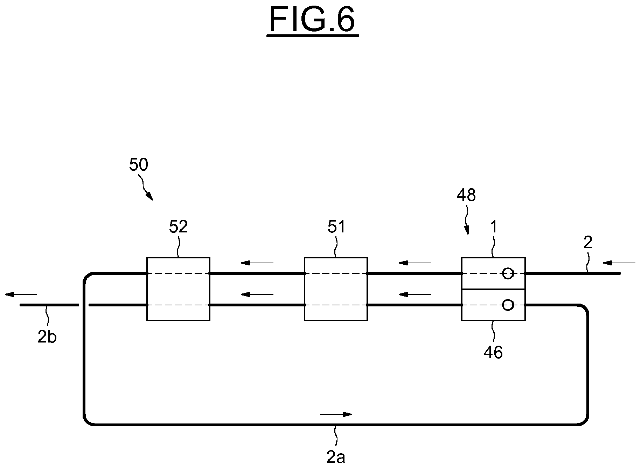

En se reportant à la figure 6, on va maintenant décrire une installation d'enrobage 50 et son mode de fonctionnement, plus spécifiquement destinés à l'enrobage d'un fil CVR (fibres de verre imprégnées d'une résine thermodurcie) avec tout d'abord une couche intermédiaire de colle époxy puis une couche de colle RFL (résorcinol formaldéhyde latex).

L'installation d'enrobage 50 comprend l'ensemble d'enrobage 48, un premier four de déshydratation 51 à air chaud, par exemple à une température d'environ 100°, et un second four de polymérisation 52 à air chaud, par exemple à une température d'environ 230°, qui sont par exemple disposés sur une ligne de production quasiment rectiligne.

Le fil 2 suit le parcours suivant, l'installation 50 comprenant des moyens, non représentés, pour le faire circuler et le maintenir tendu.

Le fil 2, arrivant par l'amont, traverse de l'amont vers l'aval le dispositif d'enrobage 1 dans lequel il se trouve enrobé d'une couche de colle époxy alimentant ce dernier.

Puis, le fil 2 enrobé traverse le premier four 51 dans lequel l'eau contenue dans la colle époxy est évacuée.

Puis, le fil 2 enrobé traverse le second four 52 dans lequel la colle époxy est polymérisée. On obtient alors un premier filament 2a.

Ensuite, ce filament 2a est dévié, grâce à des moyens non représentés, pour atteindre l'amont du dispositif d'enrobage 46.

Puis, le filament 2a traverse de l'amont vers l'aval le dispositif d'enrobage 46 dans lequel il se trouve enrobé d'une couche de colle RFL, au-dessus de la couche de colle époxy polymérisée.

Puis, le filament 2a enrobé traverse à nouveau le premier four 51 dans lequel l'eau contenu dans la colle RFL est évacuée.

Puis, le filament 2a enrobé traverse à nouveau le second four 52 dans lequel la colle RFL est polymérisée.

Enfin, le fil 2 enrobé d'une couche de colle époxy polymérisée puis d'une couche de colle RFL polymérisée forme un filament final 2b qui peut être évacué.

Les produits d'enrobage tels que la colle époxy et la colle RFL étant fragiles, il peut être souhaitable que les produits évacués des chambres 6 par les orifices inférieurs de sortie 45 des dispositifs d'enrobage 1 et 46 soient dirigés vers des réservoirs intermédiaires de recirculation, de faibles volumes, à partir desquels les produits d'enrobage sont renvoyés vers les conduits d'alimentation 43 des dispositifs d'enrobage 1 et 46. Ces réservoirs intermédiaires peuvent être alimentés depuis des réservoirs de stockage, en fonction des quantités consommées dans les dispositifs d'enrobage 1 et 46.

Grâce au démontage et au remontage faciles des éléments constituant les dispositifs d'enrobage 1 et 46, comme décrit précédemment, le nettoyage de ces derniers peut être effectué fréquemment afin d'assurer la régularité et l'uniformité des enrobages à réaliser, sans avoir besoin de couper le fil 2 car il suffit de l'écarter.

La présente invention ne se limite pas aux exemples ci-dessus décrits. Bien des variantes de réalisations sont possibles.

## Revendications

1. Dispositif d'enrobage (1) d'un fil par une matière d'enrobage, comprenant :
un boîtier (3)
qui comprend un support (4) et un couvercle (5) monté sur le support, délimitant une chambre (6), et un corps de filière (18) installé dans ladite chambre, entre le support et le couvercle ;
le support (4) et le couvercle (5) aménageant entre eux un passage traversant d'entrée (41) et un passage traversant de sortie (42) situés de part et d'autre de ladite chambre,
le corps de filière (18) comprenant une partie inférieure et une partie supérieure (18a, 18b) en appui l'une sur l'autre, aménageant entre elles un canal calibré de filière (35),
lesdits passages traversants d'entrée et de sortie et ledit canal calibré de filière étant alignés, de façon à pouvoir être traversés longitudinalement par le fil (2) à l'état tendu ; le corps de filière (18) délimitant un espace de dépôt (27), situé entre le passage traversant d'entrée (41) et le canal de filière (35) et pouvant être traversé par le fil (2) ;
et comprenant un conduit (43) d'amenée du produit d'enrobage, qui présente une extrémité inférieure de sortie débouchant dans ledit espace de dépôt (27) et située à proximité et au-dessus du fil (2) et qui est solidaire de la partie supérieure de la filière et s'étend au travers d'un passage traversant du couvercle ;
dans lequel le corps de filière comprend des parois de confinement (25, 26) situées de part et d'autre du conduit d'amenée et présentant des orifices traversants traversés par le fil, ces parois de confinement délimitant ledit espace de dépôt (27) de sorte que ce dernier soit ouvert vers le bas ;
et dans lequel le support (4) présente un orifice inférieur de sortie (45) de ladite chambre pour l'évacuation du surplus de matière d'enrobage provenant dudit espace de dépôt (27) et dudit canal calibré de filière (35).

2. Dispositif selon la revendication 1, dans lequel le corps de filière est maintenu dans ladite chambre, entre le support et le couvercle, par conjugaison de formes.

3. Dispositif selon l'une des revendications précédentes, dans lequel la chambre présente des flancs d'ajustement (9, 10 ; 11, 12) en regard entre lesquels le corps de filière (18) est engagé de façon ajustée, un ressort (20) étant installé entre le corps de filière et le couvercle pour maintenir le corps de filière en appui sur au moins un épaulement du support (13, 14).

4. Dispositif selon l'une quelconque des revendications précédentes, dans lequel le corps de filière comprend au moins une paroi transversale (28), le canal de filière comprenant un orifice calibré de filière (38) aménagé au travers de cette paroi transversale.

5. Dispositif selon la revendication 4, dans lequel ladite paroi transversale est inclinée par rapport à la direction du fil (2).

6. Dispositif selon l'une des revendications 4 et 5, le corps de filière comprend plusieurs parois transversales espacées présentant un orifice calibré de filière.

7. Procédé d'enrobage d'un fil par une matière d'enrobage, mettant en oeuvre le dispositif d'enrobage (1) selon l'une quelconque des revendications précédentes, comprenant :
faire circuler longitudinalement, de l'amont vers l'aval, le fil dans un état tendu au travers dudit passage traversant d'entrée du boîtier (3), dudit espace de dépôt (27) puis dudit canal longitudinal calibré de filière (35) dudit corps de filière (18) installé dans ladite chambre (6) délimitée par ledit boîtier (3) puis dudit passage traversant de sortie du boîtier ;
déposer de la matière d'enrobage sur le fil lors de son passage au travers dudit espace de dépôt et calibrer l'épaisseur de l'enrobage du fil lors de son passage dans le canal calibré de filière ; et
évacuer le surplus de matière d'enrobage provenant dudit espace de dépôt (27) et dudit canal calibré de filière (35) par ledit orifice inférieur de sortie (45) de ladite chambre (6).

8. Procédé selon la revendication 7, comprenant : faire circuler le fil enrobé dans au moins un four (51, 52).

9. Procédé selon l'une des revendications 7 et 8, comprenant :
faire circuler le fil au travers d'un premier corps de filière (18) pour enrober le fil d'une première couche d'une première matière d'enrobage puis au travers d'au moins un four (51, 52),
et, ensuite, faire circuler le fil au travers d'un second corps de filière (47) pour enrober le fil d'une seconde couche d'une seconde matière d'enrobage puis au travers dudit four (51, 52).

10. Procédé selon l'une quelconque des revendications 7 à 9, comprenant : évacuer le surplus de matière d'enrobage vers un réservoir intermédiaire, alimenter l'espace de dépôt depuis ce réservoir intermédiaire, alimenter ce réservoir intermédiaire depuis un réservoir de stockage.

11. Installation d'enrobage comprenant au moins un dispositif d'enrobage selon l'une quelconque des revendications 1 à 6 et comprenant au moins un four situé en aval de ce dispositif d'enrobage.

## Patentansprüche

1. Vorrichtung (1) zum Umhüllen eines Drahts mit einem Umhüllungsmaterial, die enthält:
ein Gehäuse (3), das einen Träger (4) und einen auf den Träger montierten Deckel (5), die eine Kammer (6) begrenzen, und einen zwischen dem Träger und dem Deckel in der Kammer angeordneten Zieheisenkörper (18) enthält;
wobei der Träger (4) und der Deckel (5) zwischen sich einen Eingangsdurchlassdurchgang (41) und einen Ausgangsdurchlassdurchgang (42) einrichten, die sich zu beiden Seiten der Kammer befinden,
wobei der Zieheisenkörper (18) einen unteren Teil und einen oberen Teil (18a, 18b) enthält, die aufeinander aufliegen, die zwischen sich einen kalibrierten Zieheisenkanal (35) einrichten,
wobei die Eingangs- und Ausgangsdurchlassdurchgänge und der kalibrierte Zieheisenkanal fluchtend ausgerichtet sind, um in Längsrichtung vom Draht (2) im gespannten Zustand durchquert werden zu können; wobei der Zieheisenkörper (18) einen Lagerraum (27) begrenzt, der sich zwischen dem Eingangsdurchlassdurchgang (41) und dem Zieheisenkanal (35) befindet und vom Draht (2) durchquert werden kann;
und eine Zufuhrleitung (43) des Umhüllungsprodukts enthält, die ein unteres Ausgangsende aufweist, das in den Lagerraum (27) mündet und sich in der Nähe und oberhalb des Drahts (2) befindet, und die fest mit dem oberen Teil des Zieheisens verbunden ist und sich durch einen Durchlassdurchgang des Deckels erstreckt;
wobei der Zieheisenkörper Einschließungswände (25, 26) enthält, die sich zu beiden Seiten der Zufuhrleitung befinden und vom Draht durchquerte Durchgangsöffnungen aufweisen, wobei diese Einschließungswände den Lagerraum (27) so begrenzen, dass letzterer nach unten offen ist;
und wobei der Träger (4) eine untere Ausgangsöffnung (45) der Kammer zum Abführen des Überschusses an Umhüllungsmaterial aufweist, das vom Lagerraum (27) und vom kalibrierten Zieheisenkanal (35) kommt.

2. Vorrichtung nach Anspruch 1, wobei der Zieheisenkörper in der Kammer zwischen dem Träger und dem Deckel durch Formverbindung gehalten wird.

3. Vorrichtung nach einem der vorhergehenden Ansprüche, wobei die Kammer gegenüberliegende Anpassungsflanken (9, 10; 11, 12) aufweist, zwischen denen der Zieheisenkörper (18) angepasst eingeführt wird, wobei eine Feder (20) zwischen dem Zieheisenkörper und dem Deckel eingebaut ist, um den Zieheisenkörper in Auflage auf mindestens einer Schulter des Trägers (13, 14) zu halten.

4. Vorrichtung nach einem der vorhergehenden Ansprüche, wobei der Zieheisenkörper mindestens eine Querwand (28) enthält, wobei der Zieheisenkanal eine kalibrierte Zieheisenöffnung (38) enthält, die durch diese Querwand hindurch eingerichtet ist.

5. Vorrichtung nach Anspruch 4, wobei die Querwand bezüglich der Richtung des Drahts (2) geneigt ist.

6. Vorrichtung nach einem der Ansprüche 4 und 5, wobei der Zieheisenkörper mehrere beabstandete Querwände enthält, die eine kalibrierte Zieheisenöffnung aufweisen.

7. Verfahren zum Umhüllen eines Drahts mit einem Umhüllungsmaterial, das die Umhüllungsvorrichtung (1) nach einem der vorhergehenden Ansprüche verwendet, das enthält:
den Draht in gespanntem Zustand durch den Eingangsdurchlassdurchgang des Gehäuses (3) in Längsrichtung von stromaufwärts nach stromabwärts durch den Lagerraum (27), dann durch den kalibrierten Zieheisen-Längskanal (35) des Zieheisenkörpers (18), der in die vom Gehäuse (3) begrenzte Kammer (6) eingebaut ist, dann durch den Ausgangsdurchlassdurchgang des Gehäuses zu führen;
bei seinem Durchgang durch den Lagerraum Umhüllungsmaterial auf den Draht aufzubringen und die Dicke der Umhüllung des Drahts bei seinem Durchgang durch den kalibrierten Zieheisenkanal zu kalibrieren; und
den Überschuss an vom Lagerraum (27) und vom kalibrierten Zieheisenkanal (35) kommendem Umhüllungsmaterial durch die untere Ausgangsöffnung (45) der Kammer (6) abzuführen.

8. Verfahren nach Anspruch 7, das enthält: den umhüllten Draht in mindestens einen Ofen (51, 52) zu führen.

9. Verfahren nach einem der Ansprüche 7 und 8, das enthält:
den Draht durch einen ersten Zieheisenkörper (18), um den Draht mit einer ersten Schicht eines ersten Umhüllungsmaterials zu umhüllen, dann durch mindestens einen Ofen (51, 52) zu führen,
und dann den Draht durch einen zweiten Zieheisenkörper (47), um den Draht mit einer zweiten Schicht eines zweiten Umhüllungsmaterials zu umhüllen, dann durch den Ofen (51, 52) zu führen.

10. Verfahren nach einem der Ansprüche 7 bis 9, das enthält: den Überschuss an Umhüllungsmaterial zu einem Zwischenbehälter abzuführen, den Lagerraum aus diesem Zwischenbehälter zu speisen, diesen Zwischenbehälter ausgehend von einem Speicherbehälter zu speisen.

11. Umhüllungsanlage, die mindestens eine Umhüllungsvorrichtung nach einem der Ansprüche 1 bis 6 und mindestens einen Ofen enthält, der sich stromabwärts hinter dieser Umhüllungsvorrichtung befindet.

## Claims

1. Device for coating (1) a thread with a coating material, comprising:
a housing (3) that comprises a support (4) and a cover (5) mounted on the support, delimiting a chamber (6), and a die body (18) installed in said chamber, between the support and the cover;
the support (4) and the cover (5) between them making an inlet through passage (41) and an outlet through passage (42) located on either side of said chamber,
the die body (18) comprising a lower part and an upper part (18a, 18b) that bear against one another, between them making a calibrated die channel (35),
said inlet and outlet through passages and said calibrated die channel being aligned, so as to be able to be passed through longitudinally by the thread (2) in the taut state; the die body (18) delimiting a deposition space (27), located between the inlet through passage (41) and the die channel (35) and that can be passed through by the thread (2)
and comprising a coating product supply line (43), which has a lower outlet end opening into said deposition space (27) and located close to and above the thread (2), and which is attached to the upper part of the die and extends through a through passage of the cover;
in which the die body comprises containment walls (25, 26) located on either side of the supply line and having through-orifices passed through by the thread, these containment walls delimiting a deposition space (27) that is open at the bottom;
and in which the support (4) has a lower outlet orifice (45) from said chamber for discharging excess coating material originating from said deposition space (27) and from said calibrated die channel (35).

2. Device according to Claim 1, in which the die body is held in said chamber, between the support and the cover, by the interlocking of shapes.

3. Device according to either one of the preceding claims, in which the chamber has opposite adjustment sides (9, 10; 11, 12) between which the die body (18) is engaged in an adjusted manner, a spring (20) being installed between the die body and the cover to keep the die body bearing against at least one shoulder of the support (13, 14).

4. Device according to any one of the preceding claims, in which the die body comprises at least one transverse wall (28), the die channel comprising a calibrated die orifice (38) made through this transverse wall.

5. Device according to Claim 4, in which said transverse wall is inclined relative to the direction of the thread (2).

6. Device according to either of Claims 4 and 5, the die body comprising several spaced out transverse walls having a calibrated die orifice.

7. Method for coating (1) a thread with a coating material, implementing the device for coating (1) a thread according to any one of the preceding claims comprising:
making the thread, in a taut state, circulate longitudinally, from upstream to downstream through said inlet through passage of the housing (3) of said deposition space (27) then said calibrated longitudinal die channel (35) of said die body (18) installed in a chamber (6) delimited by said housing (3) then through said outlet through passage of the housing;
depositing coating material on the wire as it passes through said deposition space and calibrating the thickness of the coating of the thread as it passes through the calibrated die channel; and
discharging the excess coating material originating from said deposition space (27) and from said calibrated die channel (35) through said lower outlet orifice (45) of said chamber (6).

8. Method according to Claim 7, comprising: making the coated thread circulate through at least one oven (51, 52).

9. Method according to either of Claims 7 and 8, comprising:
making the thread circulate through a first die body (18) in order to coat the thread with a first layer of a first coating material, then through at least one oven (51, 52),
and, next, making the thread circulate through a second die body (47) in order to coat the thread with a second layer of a second coating material, then through said oven (51, 52).

10. Method according to any one of Claims 7 to 9, comprising: discharging the excess coating material to an intermediate tank, supplying the deposition space from this intermediate tank, supplying this intermediate tank from a storage tank.

11. Coating facility comprising at least one coating device according to any one of Claims 1 to 6 and comprising at least one oven located downstream of this coating device.
